# EUROPEAN PATENT SPECIFICATION

(11) **EP 3 683 485 B1**
(45) Date of publication and mention of the grant of the patent: **03.08.2022**
(21) Application number: 19152795.1
(22) Date of filing: 21.01.2019
(51) Int. Cl.: F16L 55/027, F16L 55/054

(54) **DAMPER FOR REDUCING PULSATION OF A FLUID FLOW**
DÄMPFER ZUR REDUZIERUNG DER PULSATION EINES FLUIDSTROMS
AMORTISSEUR PERMETTANT DE RÉDUIRE LA PULSATION D'UN ÉCOULEMENT DE FLUIDE

(43) Date of publication of application: 22.07.2020
(73) Proprietor: Bleckmann GmbH & Co. KG, 5112 Lamprechtshausen (AT)
(72) Inventor: STEGER, Bernhard, 5661 Rauris (AT); HÖFER, Johann, 5113 St. Georgen (AT)
(74) Representative: Eisenführ Speiser

(56) References cited:
- DE-A1- 2 116 455
- US-A- 2 838 073
- US-A- 3 353 560
- US-A- 3 625 242

## Description

### FIELD OF THE INVENTION

The present invention relates to pulsation dampers for damping a pulsatorily conveyed fluid. More particularly, the invention relates to pulsation dampers having an elastic membrane, preferably a silicone membrane.

### BACKGROUND ART

A pulsation damper according to the present invention provided with an elastic membrane is often used in the field of automotive engineering to reduce pressure surges in fluid systems and to damp the resulting vibrations and noises. Pressure surges occur when pulsating feed pumps are used, such as piston diaphragm pumps and piston pumps, for example.

Pulsation dampers can basically be divided into two groups, hydropneumatic dampers and pulsation dampers. The hydropneumatic dampers hold an additional gas volume above a fluid volume and are thus a type of hydraulic accumulator. The second type, the pulsation dampers do not require an additional gas volume and develop their damping effect by reflection and/or absorption.

In its simplest form, the pulsation damper usually consists of a container tightly sealed by an elastic membrane, which has an inlet for a pressurized fluid flow and an outlet for a pressure-shock-calmed fluid flow. The pressure surges are smoothed by the deflection of an elastic membrane.

From DE 10 2009 046 578 A1, a pulsation damper is known which has a damper base with a base plate having an upper surface with an inlet and an outlet, connections, a support and an elastic membrane which is fitted fluid-tight at a sealing surface. The upper surface of the base plate has raised and recessed areas. The raised areas can have a pyramidal or tetrapodal shape.

US 2,838,073 A discloses a surge pressure absorber comprising, inter alia, a rigid tubular member of uniform cross section having a smooth unobstructed bore, said tubular member having a central perforate section and imperforate end sections, and a housing comprising a cylinder provided with end walls positioned substantially at right angles to the axis thereof. Each of said end walls has a substantially flat outer face and has a circular central opening of a diameter slightly greater than the external diameter of said tubular member. Moreover, a tube formed of resilient non-reinforced rubber has an internal diameter substantially equal to the external diameter of said tubular member and surrounds said tubular member.

US 3,625,242 A discloses a pressure accumulator having a cylindrical housing, a coaxial perforated pipe supported within the housing through which pressure medium flows and an elastic tubular partition dividing the space between the housing and the pipe into an outer annular gas chamber and an inner chamber. The ends of the cylindrical housing have recessed sections and tapered end rings which press the elastic tube against the recessed sections to seal the accumulator. The rings also support the perforated tube and have means for fitting the accumulator in a pressure line.

US 3,353,560 A discloses a device for damping pulsations from a flowing fluid including a pair of spaced end connection fittings for connecting the device to conduits through which the fluid will flow, a rigid hollow member connected between the fittings, and a resilient tubular member positioned within, spaced from, and extending generally coaxially with, the rigid hollow member. The tubular member is connected to receive fluid from the connection fittings, and defines an annulus with the rigid member. A coiled or helical spring-like reinforcing member is disposed coaxially inside the resilient tubular member and limits the radially inward movement of the resilient tubular member.

DE 21 16 455 A1 discloses a pulsation damper especially for liquid media and especially for suction lines of pumps, with an elastically stretchable bubble-like body that alternately expands or contracts under the changing pressure of the medium.

It is an objective of the present invention to provide a pulsation damper with a compact, simple and cost-effective design, which exhibits an excellent damping effect and high reliability.

### SUMMARY OF THE INVENTION

The objective is achieved by a pulsation damper according to the present invention as defined in independent claim 1. Further developments of the invention are defined in the dependent claims.

According to the invention, a damper for reducing pulsation of a fluid flow i.a. comprises a casing; an elastic membrane accommodated in the casing; an outer chamber arranged between the elastic membrane and the casing; an inner chamber defined inside the elastic membrane; and an inlet port and an outlet port coupled to the inner chamber, wherein the elastic membrane forms at least partially the walls of the inner chamber, wherein the inlet port and the outlet port are arranged such that propagation of a pulsation of fluid in the inner chamber from the inlet port to the outlet port is damped by at least absorption at the membrane.

In an example of the pulsation damper not forming part of the present invention, the elastic membrane is a cylindrical membrane. The pulsating shocks of the fluid flow are reduced by the resilient deflection or expansion of the membrane in at least substantially radial direction towards the casing. Thus, the pulsation of the fluid flow is continuously damped by radial expansion of the cylindrical membrane over the entire length of the flow path.

In a further example of the damper not forming part of the present invention, a surface of the elastic membrane is fluid-tightly coupled to respective surfaces of respective tube portions of the inlet port and the outlet port. This enables an easy assembly and also a quick installation of spare parts.

In an example not forming part of the present invention, the damper further comprises a core element accommodated in the inner chamber, wherein the core element is configured to deflect the fluid flow toward the membrane. The core element is preferably made of a rigid material, for instance, a plastic material. In order to achieve an additional damping effect, it may be desirable having an at least partially elastic core element.

In a further example of the damper not forming part of the present invention, the core element is a helical scroll, and the edges of the helical scroll abut to the inner surface of the cylindrical membrane. Preferably, the helical scroll having a predetermined pitch. As further explained below, this enables improved damping the pulsating fluid flow by reflecting it at the membrane more than one time.

In an example of the damper not forming part of the present invention, the casing is a cylindrical casing, and the inlet port and the outlet port are arranged on respective end faces of the cylindrical casing.

In a further example of the damper not forming part of the present invention, the casing is a cylindrical casing, and the inlet port and the outlet port are arranged laterally tangentially or radially on respective end portions of the cylindrical casing.

In an example of the damper not forming part of the present invention, the cylindrical membrane has sections with different damping properties. The membrane is preferably made of an elastomeric material, for instance silicone. Furthermore, in order to obtain membrane sections of different sizes and therefore with different damping properties, it may be desirable to provide a helical scroll having a varying pitch. Preferably, the pitch of the helical scroll increases in direction to the outlet port. By doing this, the membrane sections become more resilient in downstream direction of the fluid flow so that the damping effect increases in direction to the output.

In an example of the damper not forming part of the present invention, the thickness of the cylindrical membrane becomes thinner in downstream direction of the fluid. Each time the pulsatorily conveyed fluid is damped in one of the inner chamber sections by absorption at the membrane, the pulsation of the fluid is reduced. In order to facilitate an even more steady fluid flow, the membrane becomes more resilient in downstream direction of the fluid flow so that the damping effect increases in direction to the output.

According to the invention, the elastic membrane is a balloon having an opening.

Furthermore, the inlet port and the outlet port are combined to a connection member comprising an inner tube and a coaxially arranged outer tube, the inner tube protrudes a longer distance into the balloon than an outer tube. In some embodiments, the inner tube is associated to the inlet port or the outlet port, and an annular conduit between inner tube and outer tube is associated to the outlet port or the inlet port, respectively.

In some embodiments of the damper, an inner surface of the opening of the balloon is fluid-tightly coupled to an outer surface of the outer tube.

In some embodiments of the damper, the casing is a balloon-shaped casing, and the connection member is mounted to the opening of the balloon-shaped casing. By doing this, an outer chamber is formed between the outer surface of the balloon and the inner surface of the casing.

In some embodiments of the damper, the annular conduit is guided to a tube-shaped fitting separate from a fitting of the inlet tube.

In some embodiments of the pulsation damper, the outer chamber is filled with pressurized gas. The pressurized outer chamber is able to enhance the damping effect by supporting the elastic membrane.

Some embodiments of the invention are able to damp a pulsatorily conveyed fluid more than one time which enhances the damping effect each time the pulsatorily conveyed fluid is damped. Multiple damping is achieved by subdividing the membrane into several membrane sections, to which the pulsatorily fluid flow is directed. Furthermore, the pulsation damper has a compact, simple and cost-effective design and an excellent damping effect and reliability.

It shall be understood that a preferred embodiment of the present invention can also be any combination of the dependent claims or above embodiments with the respective independent claim.

### BRIEF DESCRIPTION OF THE DRAWINGS

- Fig. 1: shows a perspective view of a disassembled damper for reducing pulsation of a fluid flow according to a first example not forming part of the present invention.
- Fig. 2: illustrates a sectional view of the damper of Fig. 1.
- Fig. 3: shows a top view of a damper for reducing pulsation of a fluid flow according to a second example not forming part of the present invention.
- Fig. 4: illustrates a sectional view of the damper of Fig. 3 along line A-A in Fig. 3.
- Fig. 5: illustrates a sectional view of the damper of Fig. 3 along line B-B in Fig. 3.
- Fig. 6: shows a top view of a damper for reducing pulsation of a fluid flow according to the second example.
- Fig. 7: illustrates a sectional view of the damper of Fig. 6.
- Fig. 8: illustrates another sectional view of the damper of Fig. 6 along line A-A in Fig. 6.
- Fig. 9: shows a top view of the damper for reducing pulsation of a fluid flow according to an embodiment of the present invention.
- Fig. 10: shows a sectional view of the damper of Fig. 9 along line A-A in Fig. 9.

### DETAILED DESCRIPTION

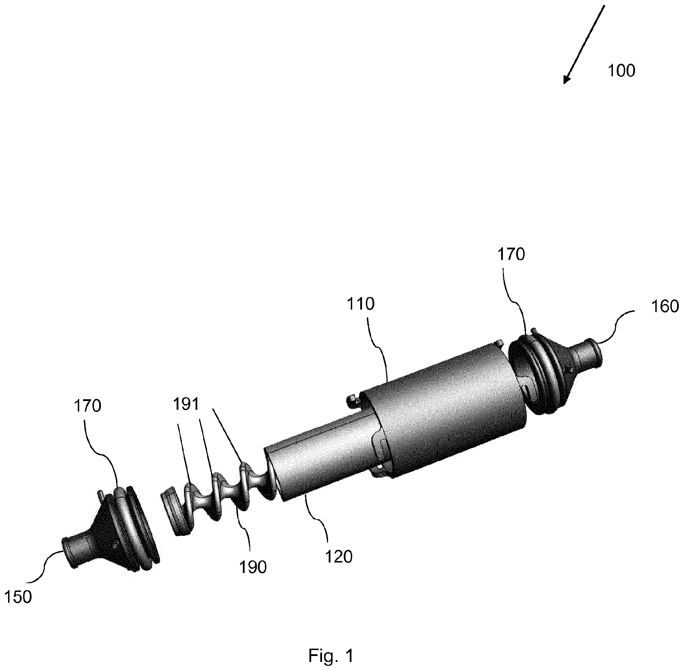

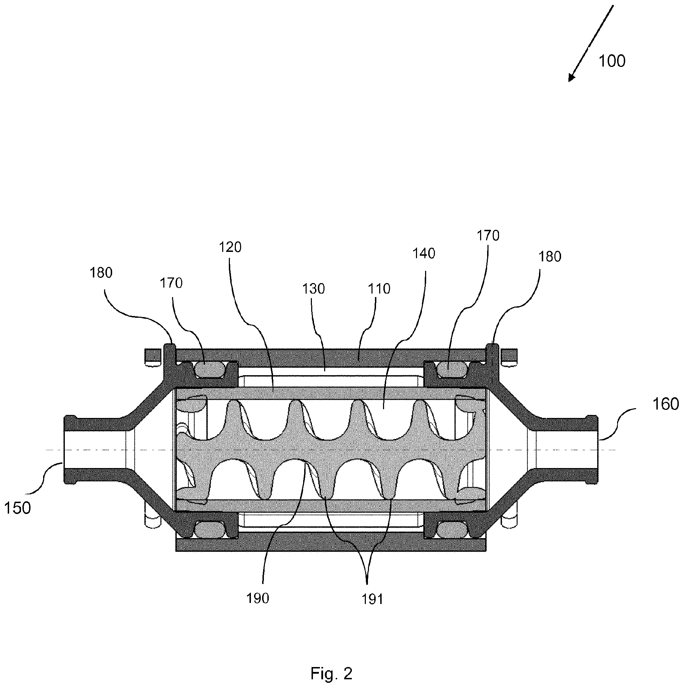

Fig. 1 and Fig. 2 show a perspective view and a sectional view of a damper for reducing pulsation of a fluid flow according to a first example not forming part of the present invention. A pulsation damper assembly 100 comprises a casing 110 and an elastic membrane 120 accommodated in the casing 110. The elastic membrane 120 is an elastic cylindrical or tubular membrane 120 which is made of, for instance, silicone but not limited thereto. Other elastic materials can be used for the membrane, such as any rubber material capable of resisting the fluid. Furthermore, the pulsation damper assembly 100 comprises an outer chamber 130 which is arranged between the elastic membrane 120 and the inner wall of the casing 110, and an inner chamber 140 defined inside the elastic membrane 120, wherein the elastic membrane 120 forms the walls of the inner chamber 140. In addition, the pulsation damper assembly 100 comprises an inlet port 150 and an outlet port 160 which are both coupled to the inner chamber 140 so that a fluid flowing from the inlet port 150 to the outlet port 160 passes through the inner chamber 140. According to the first example, the inlet port 150 and the outlet port 160 are arranged such that propagation of a pulsation of fluid in the inner chamber 140 from the inlet port 150 to the outlet port 160 is damped by absorption at the membrane 120. In other words, a pulsation of the fluid cannot propagate in a direct and linear way from the inlet port 150 to the outlet port 160.

In order to facilitate a fluid-tight sealing from the inlet port 150 through the inner chamber 140 to the outlet port 160, the outer surface of the elastic membrane 120 is fluid-tight coupled to respective inner surfaces of a tube portion of the inlet port 150 and the outlet port 160. In order to achieve this, the inlet port 150 and the outlet port 160 are mounted to respective ends of the casing 110 by fixing means 180, for instance, a bayonet fixing. In the first example, the ports 150, 160 comprise a pipe connector portion (for example a hosepipe connector), a conical middle portion increasing in diameter to a cylindrical end portion having an inner surface and an outer surface. The axial end portions of the cylindrical membrane 120 are accommodated inside the respective cylindrical end portions of the ports 150, 160. Furthermore, the outer surface of the cylindrical end portion of the respective port 150, 160 may have a circumferential groove for receiving a sealing ring 170 which seals the respective port 150, 160 against the casing 110, which preferably is also of cylindrical shape, when the cylindrical end portion of the port 150, 160 is inserted into and attached to the casing 110.

As defined above, a propagation of a pulsation of fluid in the inner chamber 140 from the inlet port 150 to the outlet port 160 is damped by absorption at the membrane 120. To achieve this, a core element 190 which is made of a rigid material is mounted inside the inner chamber 140 which extends from the inlet port 150 to the outlet port 160 along the axis of the cylindrical membrane 120. The core element 190 is configured to deflect the fluid flow toward the membrane 120 one or more times, preferably as often as possible.

By mounting the ports 150, 160 to the casing 110, the outer surfaces of the end portions of the elastic membrane 120 press against the inner surfaces of the ports 150, 160, as the outer diameter of the elastic membrane 120 is slightly larger than or equal to the inner diameter of the ports 150, 160. This is achieved, for instance, by ring-shaped end portions of the core element 190 or alternatively with an additional support ring (not shown), which presses against the inside of the membrane 120. In addition, the sealing ring 170 which may be provided between the casing 110 and the cylindrical end portions of the ports 150, 160 provides a fluid-tight (or gas tight) sealing of the outer chamber 130 against the environment. Alternatively, sealing of the outer chamber 130 against the environment can also be achieved by press fitting or gluing the cylindrical end portions of ports 150, 160 within casing 110.

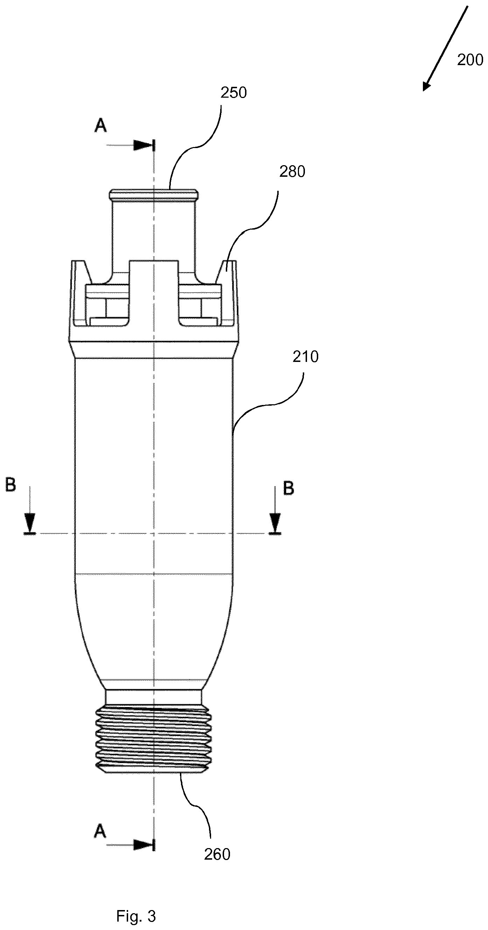

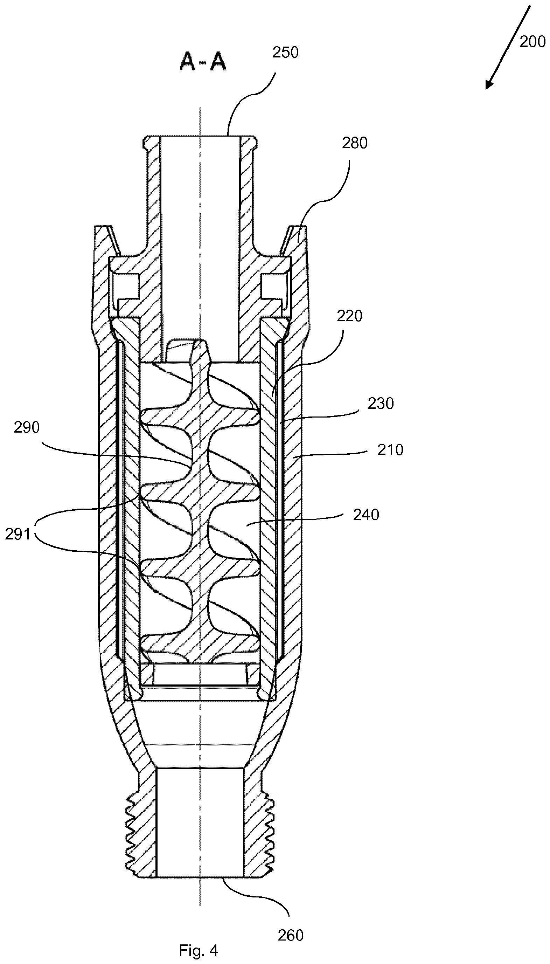

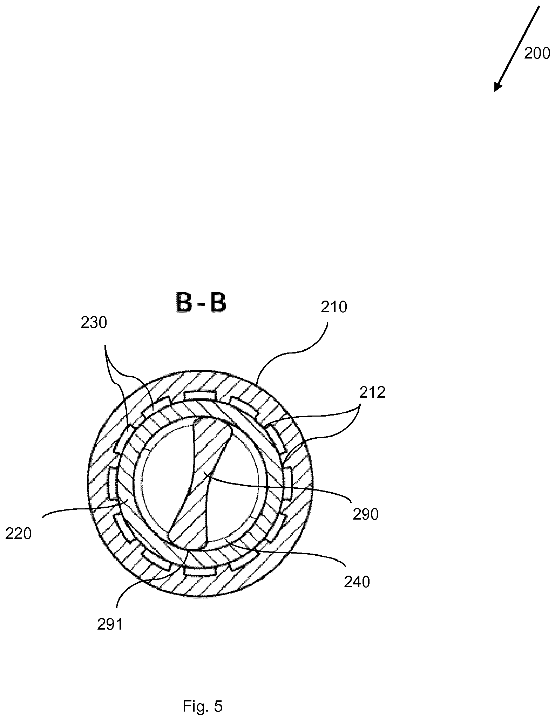

Fig. 3 illustrates a top view, Fig. 4 and Fig. 5 illustrate sectional views of a damper for reducing pulsation of a fluid flow according to a second example not forming part of the present invention. A pulsation damper assembly 200 comprises a casing 210 and an elastic membrane 220 accommodated in the casing 210. The elastic membrane 220 is an elastic cylindrical or tubular membrane 220 which is made of, for instance, silicone, but not limited thereto. Other elastic materials can be used for the membrane, such as any rubber material capable of resisting the fluid.

Furthermore, the pulsation damper assembly 200 comprises an outer chamber 230 which is arranged between the elastic membrane 220 and the inner wall of the casing 210, and an inner chamber 240 defined inside the elastic membrane 220, wherein the elastic membrane 220 forms the walls of the inner chamber 240. In addition, the pulsation damper assembly 200 comprises an inlet port 250 and an outlet port 260 which are both coupled to the inner chamber 240 so that a fluid flowing from the inlet port 250 to the outlet port 260 passes through the inner chamber 240. According to the second example, the inlet port 250 and the outlet port 260 are arranged such that propagation of a pulsation of fluid in the inner chamber 240 from the inlet port 250 to the outlet port 260 is damped by absorption at the membrane 220. In other words, a pulsation of the fluid cannot propagate in a direct and linear way from the inlet port 250 to the outlet port 260.

Further, the inner surface of the casing 210 has a plurality of protrusions 212 (cf. Fig. 5) which extend longitudinally along substantially the entire length of the elastic membrane 220. The protrusions 212 are in contact with or preferably press against the outer surface of the membrane 220, thereby forming an outer chamber 230 which consists of a plurality of separate outer chamber portions which are defined by the protrusions 212 and the membrane 220. The protrusions 212 may have any suitable shape, for instance, semicircular, triangular or rectangular.

In order to facilitate a fluid-tight sealing from the inlet port 250 through the inner chamber 240 to the outlet port 260, the inner surface of the elastic membrane 220 is fluid-tight coupled to the outer surface of a tube portion of the inlet port 250 and the outer surface of the elastic membrane 220 is fluid-tight coupled to the inner surface of the casing 210 near the outlet port 260. In orderto achieve this, an end portion of the casing 210 is tapered in direction to the outlet port 260 which thereby forms the outlet port 260, and the inlet port 250 is mounted to the outer end of the casing 210 by fixing means 280, for instance, a clip fixing. In the second example, the ports 250, 260 comprise a pipe connector portion (for example a hosepipe connector). Furthermore, the outer surface of the cylindrical end portion of the inlet port 250 may have a circumferential groove.

As defined above, a propagation of a pulsation of fluid in the inner chamber 240 from the inlet port 250 to the outlet port 260 is damped by absorption at the membrane 220. To achieve this, a core element 290 which is made of a rigid material is mounted inside the inner chamber 240 which extends from the inlet port 250 to the outlet port 260 along the axis of the cylindrical membrane 220. The core element 290 is configured to deflect the fluid flow toward the membrane 220 one or more times, preferably as often as possible.

By mounting the inlet port 250 to the casing 210, the outer surfaces of the end portions of the elastic membrane 220 press against the inner surfaces of the casing 210, as the outer diameter of the elastic membrane 220 is slightly larger than or equal to the inner diameter of the casing 210. This is achieved, for instance, by ring-shaped end portions of the core element 290 or alternatively with an additional support ring (not shown), which presses against the inside of the membrane 220. Alternatively, sealing of the outer chamber 230 against the environment can also be achieved by press fitting or gluing.

Optionally, the inlet port 250 and the core element 290 are manufactured in one-piece, in order to simplify the assembly process of the damper. Further, the outlet port 260 may have an outer thread to attach the damper securely.

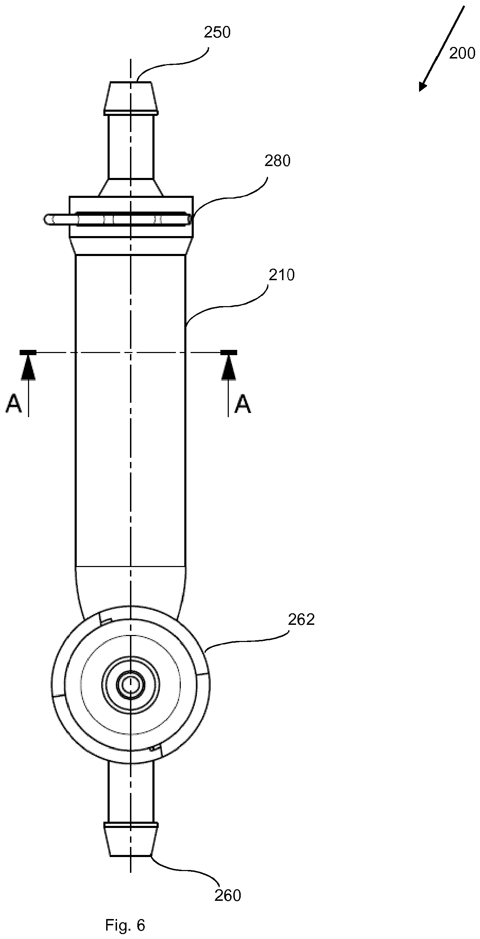

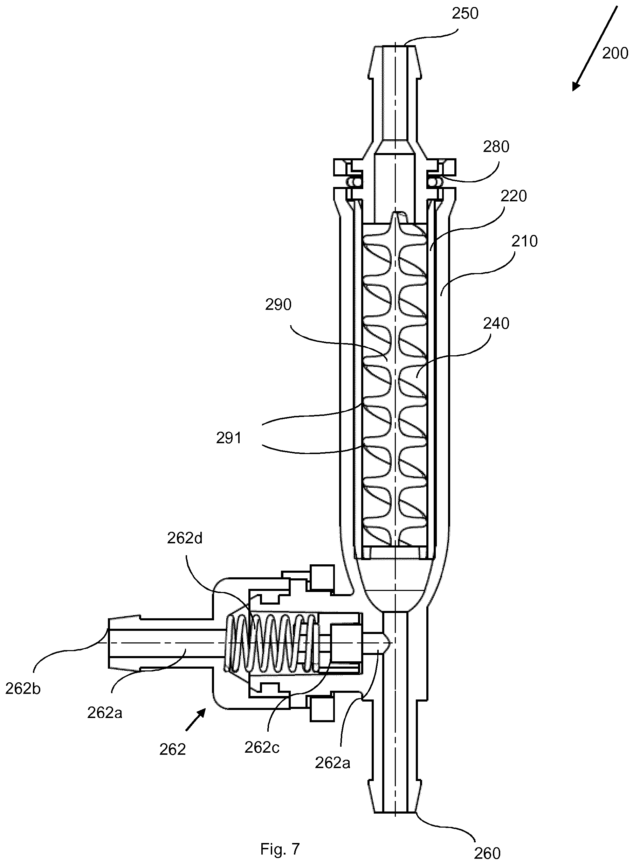

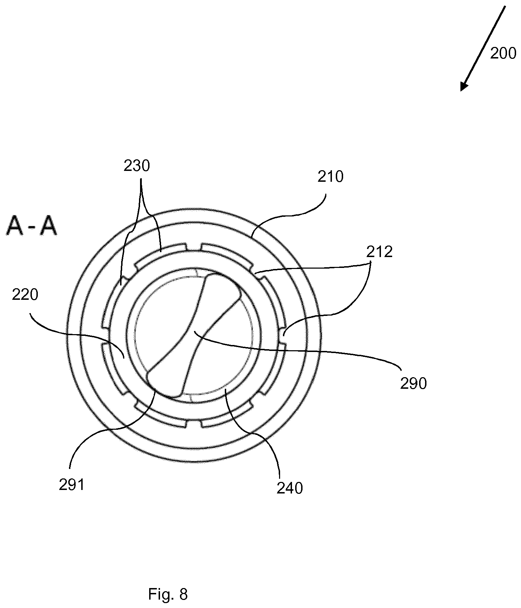

Fig. 6 illustrates a top view, Fig. 7 and Fig. 8 illustrate sectional views of a damper for reducing pulsation of a fluid flow according to the second example, wherein the fixing means 280 is a bendable clamp. The casing 210 has an almost continuous slit near the inlet port 250, wherein the inlet port 250 has a corresponding groove at the outer surface of said inlet port 250. Thus, the clamp is clamped through the slit of the casing 210 and presses against the inner surface of the groove of the inlet port 250.

Further, the outlet port 260 may have a branch leading to a valve 262. The valve 262 is preferably a pressure-relief valve 262 which is able to intercept excess pressures of the fluid and release the overpressured fluid through said pressure-relief valve 262. Preferably, the pressure-relief valve 262 consists of a pipe 262a having an outlet port 262b which is preferably arranged perpendicular to the outlet port 260 of the damper, wherein the pipe 262a extends from the outlet port 260 of the damper to the outlet port 262b of the pressure-relief valve 262, a movable closure element 262c, which seals the pressure-relief valve 262 in a first position and opens the pressure-relief valve 262 in a second position, and a spring 262d which presses against the closure element 262c and holds the closure element 262c in the first position. As a pressure exceeds a predetermined value, the overpressured fluid compresses the spring 262d via the closure element 262c. Thereby, the closure element 262c moves in the second position and opens the pipe 262a of the pressure-relief valve 262 to release excess pressures. For the same reason, pressure-relief valve 262 may also be arranged at the inlet port 250 of the damper. The valve 262 may also be a switching valve.

In another example not forming part of the present invention, the inlet port 150; 250 and the outlet port 160; 260 are arranged laterally tangentially or radially on respective end portions of the cylindrical casing 110; 210, depending on spatial requirements when mounting the pulsation damper in another device.

In a further example not forming part of the present invention, the core element 190; 290 is a helical scroll 190; 290 having a predetermined pitch, but not limited thereto, which is explained in detail below.

The edges 191; 291 of the helical scroll 190; 290 abut to the inner surface of the cylindrical membrane 120; 220. Therefore, a direct fluid flow from the inlet port 150; 250 to the outlet port 160; 260 is not possible. A pulsating fluid flow flows through the inlet port 150; 250 into the inner chamber 140; 240, wherein the turns of the helical scroll 190; 290 in cooperation with the cylindrical membrane 120; 220 guide the pulsating fluid flow along a helical path. Centrifugal forces urge the fluid in direction to the cylindrical membrane 120; 220. The pulsating shocks of the fluid flow are reduced by the resilient deflection or expansion of the membrane 120; 220 in radial direction towards the casing 110; 210. Thus, the pulsation of the fluid flow is continuously damped by radial expansion of the cylindrical membrane 120; 220 over the entire length of the helical flow path along scroll 190; 290.

The core element 190; 290 is not limited to a helical scroll 190; 290; many other alternative shapes are conceivable which deflect the pulsating fluid flow in direction to the cylindrical membrane 120; 220. A meandering fluid flow may be achieved by a core element comprising alternately staggered deflection plates arranged within the cylindrical membrane 120; 220 and connected to each other by longitudinal struts. The pulsating fluid flow flows through the inlet port 150; 250 into the inner chamber 140; 240, wherein a first deflection plate guides the pulsating fluid flow in the direction to the elastic membrane 120; 220. The pulsating shocks of the fluid flow are reduced by the resilient deflection or expansion of the membrane 120; 220 in radial direction towards the casing 110; 210. After reaching a second deflection plate, the pulsating fluid flow is damped a second time. Each time the fluid flow passes around a deflection plate, it is reflected and damped, so that the pulsation of the fluid flow decreases gradually along the flow path to the outlet port 160; 260.

Optionally, the inner diameter of the cylindrical membrane 120; 220 may be smaller than the outer diameter of the helical scroll 190; 290. In this way, each membrane section between two adjacent helical scroll edges 191; 291, with respect to the cross-sectional view of Fig. 2, is biased in direction to the center axis of the cylindrical membrane 120; 220. Thus, the fluid flow is less likely to bypass in axial direction from one section or turn along the helical flow path to an adjacent section or turn via a slot between an edge 191; 291 of the helical scroll 190; 290 and the membrane 120; 220. Such slots may occur when the membrane is expanded radially and the force or pressure applied from the fluid flow on a membrane section is larger than the contact pressure between the membrane 120; 220 and the edge 191; 291 of the helical scroll 190; 290. Alternatively, it may be desirable to allow the occurrence of slots to achieve an additional damping effect when the fluid flow is divided over at least an axial portion along the cylindrical membrane 120; 220 into a helical flow and an axially proceeding sheath flow over the edge 191; 291 of the helical scroll 190; 290.

Optionally, the outer chamber 130; 230 of the pulsation damper assembly 100; 200 can be filled with pressurized gas, in order to achieve a higher damping effect. The pressure in the outer chamber 130; 230 may be selected as a function of the peak pressure of the fluid flow. This can also be used instead of or in addition to the bias of the membrane 120; 220 in direction to the central axis by choosing a smaller diameter of the cylindrical membrane 120; 220, as described above.

In a further example not forming part of the present invention, the cylindrical membrane 120; 220 has sections with different damping properties. To achieve this, the thickness of the cylindrical membrane 120; 220 can be variated, for example, or the membrane can be arranged such that some sections of the membrane 120; 220 comprise more than one layer by everting the cylindrical membrane 120; 220 so as to fold it back on itself. For instance, the radial thickness of the cylindrical membrane 120; 220 decreases in downstream direction with respect to the fluid flow. An advantage of such membrane 120; 220 is that the damping effect near the outlet port 160; 260 is larger than near the inlet port 150; 250. In this way, the undamped pulsating fluid flow entering the core element 190; 290 (helical scroll or other core element as described above) is first damped by a membrane section of higher rigidity, while the rigidity of the membrane sections decreases along the flow path, so that pulsating flow sections, which are located more downstream and exhibit a lower pulsation due to the damping effect in upstream flow sections, receive a larger damping effect by weaker and more resilient membrane sections. Thus, a maximum damping effect can be achieved with a given length and diameter of the cylindrical pulsation damper, while the extent of radial deflection of the membrane is approximately constant along the flow path and close to a desired most effective value.

Furthermore, it may be desirable to provide a helical scroll 190; 290 having a varying pitch, in order to obtain membrane sections of different sizes and therefore with different damping properties.

A pulsating shock of the fluid flow is reduced by deflection at a membrane section, thereby the membrane 120; 220 absorbs at least a part of the kinetic energy of the pulsating shock and releases a reduced shock to the stationary fluid in the inner chamber 140; 240. This process is repeated successively over the entire length of the flow path of the helical scroll 190; 290 until the shock is totally damped.

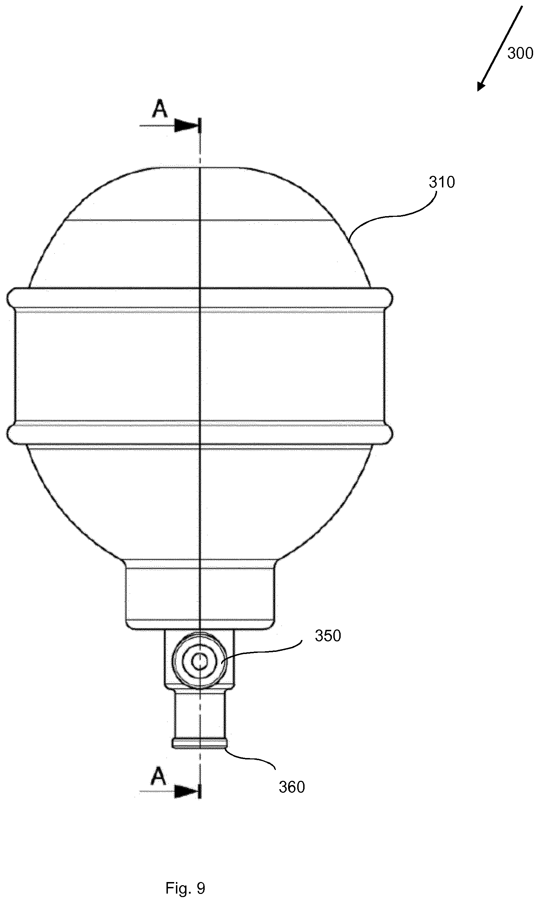

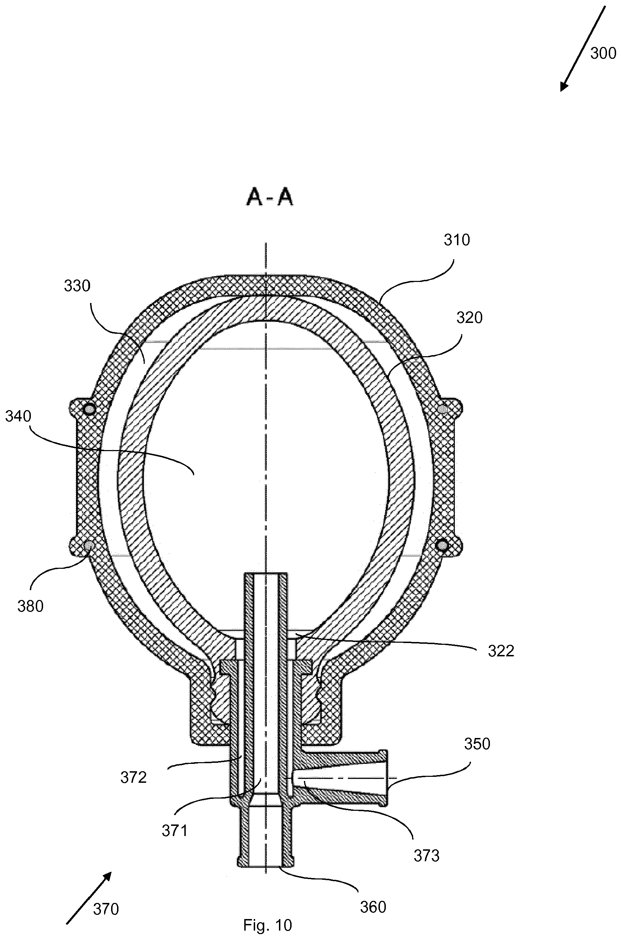

Fig. 9 and Fig. 10 illustrate a top view and a sectional view of a damper for reducing pulsation of a fluid flow according to the present invention. A pulsation damper assembly 300 comprises a casing 310 and a balloon-shaped elastic membrane 320 accommodated in the casing 310. The elastic balloon-shaped membrane 320 has an opening 322 which may comprise an approximately cylindrical neck or collar. The balloon-shaped membrane 320 is made of, for instance, silicone but not limited thereto. Any resilient or elastic material can be used such as any rubber materials, according to the requirements with respect to the operation environment and the fluid (resistance to temperature and aggressive fluids, for example). Furthermore, the pulsation damper assembly 300 comprises an outer chamber 330 which is arranged between the elastic membrane 320 and the casing 310, and an inner chamber 340 defined inside the elastic membrane 320. In addition, the pulsation damper assembly 300 comprises an inlet port 350 and an outlet port 360 which are both coupled to the inner chamber 340 so that a fluid flowing from the inlet port to the outlet port passes through the inner chamber 340. The inlet port 350 and the outlet port 360 are arranged such that propagation of a pulsation of fluid in the inner chamber 340 from the inlet port 350 to the outlet port 360 is damped by absorption at the balloon 320.

Similar to the first example described above, a pulsation of the fluid cannot propagate in a direct and linear way from the inlet port to the outlet port. In the preferred embodiment of the present invention, this is obtained by combining the inlet port 350 and the outlet port 360 to a connection member 370 comprising an inner tube 371 and a coaxially arranged outer tube 372 so that the fluid flow exiting one of the inner or outer tubes 371, 372 is deflected by the balloon-shaped membrane 320 by 180°, i.e. the direction of flow is reversed, so as to return to the connection member 370 and enter the other one of the inner and outer tubes 371, 372. Preferably, but not necessarily, the inner tube 371 protrudes a longer distance into the balloon 320 than the outer tube 372 so that decoupling of the orifices at the end of tubes within the balloon is improved and transmission of pressure waves from inner tube 371 to the outer tube 372 and vice versa is reduced. The inner tube 371 may be associated to one of inlet port 350 and outlet port 360, while an annular conduit 373 between the inner tube 371 and the outer tube 372 is associated to the other one of outlet port 360 and inlet port 350, respectively. Thus, a direct and linear fluid flow and propagation of pulsation waves from the inlet port 350 to the outlet port 360 is prevented.

Moreover, the inner surface of the opening 322 of the balloon 320 is fluid-tight coupled to an outer surface of the outer tube 372. A fluid-tight coupling may be established by compression, bonding or other suitable means. Moreover, the casing 310 is a balloon-shaped casing 310, and the connection member 370 is mounted to the opening of the balloon-shaped casing 310.

For ease of assembly, the casing 310 may be formed by two parts connected to each other by suitable connecting means 380, for instance, by pressing respective connection pins 380 into mating receiving holes arranged on the rim of the two casing parts, or by other attaching means.

In a preferred embodiment, the annular conduit 373 is guided to a tube-shaped fitting separate from a fitting of the inner tube 371. By doing this, the inlet port 350 and the outlet port 360 are separated from each other to achieve good accessibility of the ports 350, 360, and facilitating the connection to other devices via hosepipes, for example, which can be easily pushed over the tube shaped fittings.

The pulsating fluid flow flows through the inlet port 350 and is deflected and damped by the balloon-shaped membrane 320 which expands in the direction of the casing 310 and is subsequently guided to the outlet port 360.

Optionally, the outer chamber 330 of the pulsation damper assembly 300 is filled with pressurized gas, in order to achieve a higher damping effect or to adapt the damper to a desired maximum operating pressure of the fluid, so that the membrane 320 obtains sufficient moving space within the casing 310 and the balloon portion of the membrane 320 does not touch the casing 310 when it expands due to the pulsation.

### REFERENCE SIGNS

- 100; 200; 300: pulsation damper assembly
- 110; 210; 310: casing
- 120; 220; 320: elastic membrane
- 130; 230; 330: outer chamber
- 140; 240; 340: inner chamber
- 150; 250; 350: inlet port
- 160; 260; 360: outlet port
- 170: sealing ring
- 180; 280: fixing means
- 190; 290: core element
- 191; 291: edge of the core element
- 212: protrusion
- 262: valve
- 322: opening
- 370: connection member
- 371: inner tube
- 372: outer tube
- 373: annular conduit
- 380: connecting means

## Claims

1. A damper for reducing pulsation of a fluid flow, comprising:
a casing (310);
an elastic membrane (320) accommodated in the casing (310);
an outer chamber (330) arranged between the elastic membrane (320) and the casing (310);
an inner chamber (340) defined inside the elastic membrane (320); and
an inlet port (350) and an outlet port (360) coupled to the inner chamber (340),
wherein the elastic membrane (320) is a balloon (320) having an opening (322),
wherein the elastic membrane (320) forms at least partially the walls of the inner chamber (340), and
wherein the inlet port (350) and the outlet port (360) are arranged such that propagation of a pulsation of fluid in the inner chamber (340) from the inlet port (350) to the outlet port (360) is damped by absorption at the membrane (320),
**characterized in that**
the inlet port (350) and the outlet port (360) are combined to a connection member (370) comprising an inner tube (371) and a coaxially arranged outer tube (372), the inner tube (371) protrudes a longer distance into the balloon (320) than the outer tube (372).

2. The damper according to claim 1,
wherein the inner tube (371) is associated to the inlet port (350) or the outlet port (360), and an annular conduit (373) between the inner tube (371) and the outer tube (372) is associated to the outlet port (360) or the inlet port (350), respectively.

3. The damper according to claim 1 or 2,
wherein an inner surface of the opening (322) of the balloon (320) is fluid-tight coupled to an outer surface of the outer tube (372).

4. The damper according to any of claims 1 to 3,
wherein the casing (310) is a balloon-shaped casing (310), and the connection member (370) is mounted to the opening (322) of the balloon-shaped casing (310).

5. The damper according to any of claims 1 to 4,
wherein the annular conduit (373) is guided to a tube-shaped fitting separate from a fitting of the inner tube (372).

6. The damper according to any of claims 1 to 5,
wherein the outer chamber (330) is filled with pressurized gas.

## Patentansprüche

1. Dämpfer zur Reduzierung der Pulsation eines Fluidstroms, umfassend:
ein Gehäuse (310);
eine elastische Membran (320), die in dem Gehäuse (310) aufgenommen ist;
eine äußere Kammer (330), die zwischen der elastischen Membran (320) und dem Gehäuse (310) angeordnet ist;
eine innere Kammer (340), die innerhalb der elastischen Membran (320) gebildet ist; und
eine Einlassöffnung (350) und eine Auslassöffnung (360), die mit der inneren Kammer (340) gekoppelt sind,
wobei die elastische Membran (320) ein Ballon (320) ist, der eine Öffnung (322) aufweist,
wobei die elastische Membran (320) zumindest teilweise die Wände der inneren Kammer (340) ausbildet und
wobei die Einlassöffnung (350) und die Auslassöffnung (360) so angeordnet sind, dass die Ausbreitung einer Pulsation von Fluid in der inneren Kammer (340) von der Einlassöffnung (350) zu der Auslassöffnung (360) durch Absorption an der Membran (320) gedämpft wird,
**dadurch gekennzeichnet, dass**
die Einlassöffnung (350) und die Auslassöffnung (360) zu einem Verbindungselement (370) zusammengefasst sind, das ein inneres Rohr (371) und ein koaxial angeordnetes äußeres Rohr (372) umfasst, das innere Rohr (371) über einen größeren Abstand in den Ballon (320) hineinragt als das äußere Rohr (372).

2. Dämpfer nach Anspruch 1,
wobei das innere Rohr (371) der Einlassöffnung (350) oder der Auslassöffnung (360) zugeordnet ist und eine ringförmige Leitung (373) zwischen dem inneren Rohr (371) und dem äußeren Rohr (372) der Auslassöffnung (360) bzw. der Einlassöffnung (350) zugeordnet ist.

3. Dämpfer nach Anspruch 1 oder 2,
wobei eine innere Fläche der Öffnung (322) des Ballons (320) fluiddicht mit einer äußeren Fläche des äußeren Rohres (372) gekoppelt ist.

4. Dämpfer nach einem der Ansprüche 1 bis 3,
wobei das Gehäuse (310) ein ballonförmiges Gehäuse (310) ist und das Verbindungselement (370) an der Öffnung (322) des ballonförmigen Gehäuses (310) angebracht ist.

5. Dämpfer nach einem der Ansprüche 1 bis 4,
wobei die ringförmige Leitung (373) zu einem rohrförmigen Anschlussstück geführt wird, das von einem Anschlussstück des inneren Rohres (372) getrennt ist.

6. Dämpfer nach einem der Ansprüche 1 bis 5,
wobei die äußere Kammer (330) mit Druckgas gefüllt ist.

## Revendications

1. Amortisseur permettant de réduire la pulsation d'un écoulement de fluide, comprenant :
une enveloppe (310) ;
une membrane élastique (320) logée dans l'enveloppe (310) ;
une chambre extérieure (330) disposée entre la membrane élastique (320) et l'enveloppe (310) ;
une chambre intérieure (340) définie à l'intérieur de la membrane élastique (320) ; et
un orifice d'entrée (350) et un orifice de sortie (360) couplés à la chambre intérieure (340),
dans lequel la membrane élastique (320) est un ballonnet (320) ayant une ouverture (322),
dans lequel la membrane élastique (320) forme au moins partiellement les parois de la chambre intérieure (340), et
dans lequel l'orifice d'entrée (350) et l'orifice de sortie (360) sont disposés de telle sorte que la propagation d'une pulsation de fluide dans la chambre intérieure (340) depuis l'orifice d'entrée (350) jusqu'à l'orifice de sortie (360) est amortie par absorption au niveau de la membrane (320),
**caractérisé en ce que**
l'orifice d'entrée (350) et l'orifice de sortie (360) sont combinés à un élément de connexion (370) comprenant un tube intérieur (371) et un tube extérieur (372) disposé de manière coaxiale, le tube intérieur (371) faisant saillie sur une plus grande distance dans le ballonnet (320) que le tube extérieur (372).

2. Amortisseur selon la revendication 1,
dans lequel le tube intérieur (371) est associé à l'orifice d'entrée (350) ou à l'orifice de sortie (360), et un conduit annulaire (373) entre le tube intérieur (371) et le tube extérieur (372) est associé à l'orifice de sortie (360) ou à l'orifice d'entrée (350), respectivement.

3. Amortisseur selon la revendication 1 ou 2,
dans lequel une surface intérieure de l'ouverture (322) du ballonnet (320) est couplée de manière étanche au fluide à une surface extérieure du tube extérieur (372).

4. Amortisseur selon l'une quelconque des revendications 1 à 3,
dans lequel l'enveloppe (310) est une enveloppe en forme de ballonnet (310), et l'élément de connexion (370) est monté sur l'ouverture (322) de l'enveloppe en forme de ballonnet (310).

5. Amortisseur selon l'une quelconque des revendications 1 à 4,
dans lequel le conduit annulaire (373) est guidé vers un raccord en forme de tube séparé d'un raccord du tube intérieur (372).

6. Amortisseur selon l'une quelconque des revendications 1 à 5,
dans lequel la chambre extérieure (330) est remplie de gaz sous pression.
